# EUROPEAN PATENT APPLICATION

(11) **EP 4 787 880 A1**
(43) Date of publication of application: **05.08.2026**
(21) Application number: 24871809.0
(22) Date of filing: 09.09.2024
(51) Int. Cl.: H04N 23/60, G03B 11/00

(54) **INFORMATION PROCESSING SYSTEM, IMAGE PROCESSING DEVICE, OPTICAL DEVICE, INFORMATION PROCESSING METHOD, AND PROGRAM**

(30) Priority: 28.09.2023 JP 2023168623
(71) Applicant: FUJIFILM Corporation, Tokyo 106-8620 (JP)
(72) Inventor: KOBAYASHI Toshiki, Saitama-shi, Saitama 331-9624 (JP); ISHIDA Kazuki, Saitama-shi, Saitama 331-9624 (JP); TANAKA Koichi, Saitama-shi, Saitama 331-9624 (JP); FUJIMOTO Shinichi, Saitama-shi, Saitama 331-9624 (JP)
(74) Representative: Dehns Germany Partnerschaft mbB
(86) International application number: PCT/JP2024/032180
(87) International publication number: WO 2025/070011

(57) **Abstract**

Provided are an information processing system, an image processing device, an optical device, an information processing method, and a program configured to acquire a good image from a plurality of polarization images obtained by imaging an object. An information processing system includes one or more processors, in which the one or more processors are configured to acquire a plurality of polarization images acquired by imaging an object in a plurality of imaging directions in a state in which polarization directions are different from each other, and acquire a first image from the two or more polarization images.

## Description

### BACKGROUND OF THE INVENTION

### 1. Field of the Invention

The present invention relates to an information processing system, an image processing device, an optical device, an information processing method, and a program.

### 2. Description of the Related Art

JP2014-182328A discloses a camera including an optical lens, a rotatable polarization filter, and a control unit that detects a rotation angle of the polarization filter, captures a plurality of images, and records the rotation angle information in association with each image.

### SUMMARY OF THE INVENTION

One embodiment according to the technology of the present disclosure provides an information processing system, an image processing device, an optical device, an information processing method, and a program that can acquire a good image from a plurality of polarization images obtained by imaging an object.

A first aspect provides an information processing system including one or more processors, in which the one or more processors are configured to acquire a plurality of polarization images acquired by imaging an object in a plurality of imaging directions in a state in which polarization directions are different from each other, and acquire a first image from the two or more polarization images.

A second aspect provides the information processing system according to the first aspect, in which the one or more processors are configured to acquire ancillary information including information on a polarization direction of the polarization image.

A third aspect provides the information processing system according to the first aspect or the second aspect, in which the one or more processors are configured to acquire the first image generated based on analysis of the two or more images having different polarization directions.

A fourth aspect provides the information processing system according to the third aspect, in which the analysis is analysis in units of pixels.

A fifth aspect provides the information processing system according to the fourth aspect, in which the analysis in units of pixels of corresponding portions corresponding to the same position of the two or more polarization images having different polarization directions is comparative dark synthesis.

A sixth aspect provides the information processing system according to any one of the first to fifth aspects, in which the one or more processors are configured to, in a case of generating the first image, transform at least one of the two or more images having different polarization directions into a coordinate system of at least one other image by geometric transformation based on information between the two or more images having different polarization directions.

A seventh aspect provides the information processing system according to any one of the first to sixth aspects, in which the one or more processors are configured to determine whether to apply the plurality of polarization images to generation of the first image.

An eighth aspect provides the information processing system according to the second aspect, in which the ancillary information includes position information of an imaging apparatus in a case of imaging.

A ninth aspect provides the information processing system according to the second aspect or the eighth aspect, in which the ancillary information is associated with the first image.

A tenth aspect provides the information processing system according to any one of the first to ninth aspects, in which the one or more processors are configured to generate a 3D model of the object based on the first image generated in the plurality of imaging directions.

An eleventh aspect provides the information processing system according to any one of the first to tenth aspects, in which the one or more processors are configured to analyze the two or more images having different polarization directions acquired in one imaging direction of the plurality of imaging directions, and determine a polarization direction in an imaging direction different from the one imaging direction of the plurality of imaging directions.

A twelfth aspect provides the information processing system according to any one of the first to eleventh aspects, in which the one or more processors are configured to determine a condition for capturing the two or more images having different polarization directions based on an environmental condition for imaging the object and an imaging position for imaging the object.

A thirteenth aspect provides the information processing system according to any one of the first to eleventh aspects, in which the one or more processors are configured to receive an imaging mode, and determine a condition for capturing the two or more images having different polarization directions based on the imaging mode.

A fourteenth aspect provides the information processing system according to any one of the first to thirteenth aspects, in which the one or more processors are configured to calculate a specular reflectance or a diffuse reflectance at a coordinate position in the two or more images having different polarization directions based on information on the imaging direction and the polarization direction.

A fifteenth aspect provides the information processing system according to any one of the first to fourteenth aspects, in which the one or more processors are configured to determine a condition for capturing the plurality of polarization images based on a pre-image obtained by imaging the object before acquiring the plurality of polarization images.

A sixteenth aspect provides the information processing system according to any one of the first to fifteenth aspects, in which the two or more polarization images are time frame images included in a moving image.

A seventeenth aspect provides an image processing device including an optical device including a polarization filter capable of capturing an image of an object, and an information processing device, in which the image processing device includes one or more processors included in any of the optical device or the information processing device, and the one or more processors are configured to acquire a plurality of polarization images acquired by imaging the object in a plurality of imaging directions in a state in which polarization directions are different from each other, and acquire a first image from the two or more polarization images.

An eighteenth aspect provides the image processing device according to the seventeenth aspect, in which the one or more processors are configured to acquire ancillary information including information on a polarization direction of the polarization image.

A nineteenth aspect provides the image processing device according to the seventeenth aspect or the eighteenth aspect, in which the one or more processors are configured to generate a 3D model of the object based on the first image generated in the plurality of imaging directions.

A twentieth aspect provides the image processing device according to any one of the seventeenth to nineteenth aspects, in which the one or more processors are configured to determine a condition for capturing the plurality of polarization images based on a pre-image obtained by imaging the object before acquiring the plurality of polarization images.

A twenty-first aspect provides the image processing device according to any one of the seventeenth to twentieth aspects, in which the one or more processors are configured to perform control to move the optical device or the object.

A twenty-second aspect provides the image processing device according to any one of the seventeenth to twenty-first aspects, in which the one or more processors are configured to perform control to change in a polarization direction of the polarization filter.

A twenty-third aspect provides an optical device including one or more processors, and a polarization filter, the optical device being capable of capturing an image of an object, in which the one or more processors are configured to acquire a plurality of polarization images acquired by imaging the object in a plurality of imaging directions in a state in which polarization directions are different from each other, and acquire a first image from the two or more polarization images.

A twenty-fourth aspect provides the optical device according to the twenty-third aspect, in which the one or more processors are configured to acquire ancillary information including information on a polarization direction of the polarization image.

A twenty-fifth aspect provides the optical device according to the twenty-third aspect or the twenty-fourth aspect, in which the one or more processors are configured to determine a condition for capturing the plurality of polarization images based on a pre-image obtained by imaging the object before acquiring the plurality of polarization images.

A twenty-sixth aspect provides the optical device according to any one of the twenty-third to twenty-fifth aspects, in which the one or more processors are configured to generate a 3D model of the object based on the first image generated in the plurality of imaging directions.

A twenty-seventh aspect provides an information processing method executed by an information processing system including one or more processors, the information processing method including, by the one or more processors, acquiring a plurality of polarization images acquired by imaging an object in a plurality of imaging directions in a state in which polarization directions are different from each other, and acquiring a first image from the two or more polarization images.

A twenty-eighth aspect provides a program causing an information processing system including one or more processors to execute an information processing method, the program causing the one or more processors to acquire a plurality of polarization images acquired by imaging an object in a plurality of imaging directions in a state in which polarization directions are different from each other, and acquire a first image from the two or more polarization images.

### BRIEF DESCRIPTION OF THE DRAWINGS

FIG. 1 is a diagram showing an outline of an image processing device.
FIG. 2 is a diagram showing an image processing device different from the image processing device of FIG. 1.
FIG. 3 is a block diagram showing a schematic configuration of a camera.
FIG. 4 is a block diagram showing a schematic configuration of a computer.
FIG. 5 is a flowchart for describing an information processing method.
FIG. 6 is a diagram for describing an example of polarization image capturing.
FIG. 7 is a diagram for describing an example of polarization image capturing.
FIG. 8 is a block diagram showing functions related to acquisition of a first image.
FIG. 9 is a block diagram showing functions related to generation of a 3D model.
FIG. 10 is a flowchart showing a method of specifying a polarization image to be excluded.
FIG. 11 is a flowchart showing a method of specifying a first image to be excluded.
FIG. 12 is a flowchart for describing an information processing method including pre-capturing.
FIG. 13 is a diagram for describing an example of condition setting of polarization image capturing.

### DESCRIPTION OF THE PREFERRED EMBODIMENTS

Hereinafter, preferred embodiments of the present invention will be described in detail with reference to the accompanying drawings.

### [Outline]

In 3D modeling by photogrammetry, in a case where an image used for creating a model includes a reflective portion, the accuracy of a generated 3D model may deteriorate. In a scene in which an environment such as external illumination cannot be constructed, it is necessary to acquire an image used for 3D modeling while suppressing a reflection influence as much as possible.

Therefore, in the embodiment, an image in which reflection is suppressed by using a polarization member can be acquired in order to improve the quality of the 3D model.

### <Embodiment>

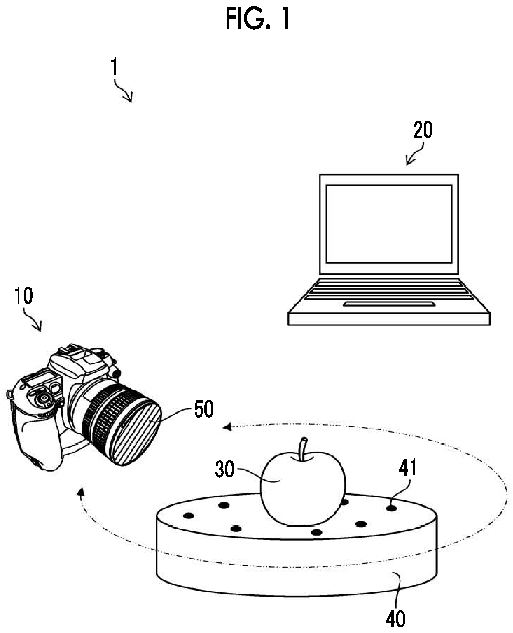

FIG. 1 is a diagram showing a system 1 of the embodiment. The system 1 includes a camera 10 and a computer 20. An object 30 that is a target of imaging is disposed on an imaging table 40.

The camera 10 can move around the object 30. The camera 10 is configured to image the object 30 from a plurality of directions in a case of moving around the object 30. The camera 10 includes a rotatable polarization filter 50. In a case of imaging the entire object 30, the camera 10 moves around the object 30 (for example, 360° or more). In a case of imaging only a part of the object 30, the camera 10 moves in a specific range (a range smaller than 360°) of the object 30. The camera 10 can be moved around the object 30 by a user holding the camera 10 or a moving object that supports the camera 10. The moving body is, for example, an arm attached to the imaging table 40. The arm is configured to be movable around the imaging table 40 by a motor or the like. In addition, in a case in which the object 30 is large, the moving object may be a vehicle or a drone. The polarization filter 50 is an example of a polarization member according to the present invention. The polarization member is not limited to the polarization filter 50 as long as the polarization of light vibrating in a specific direction can be controlled and a component (reflected light component) of light from the specific direction can be removed.

The camera 10 is configured to image the object 30 in an imaging direction at each position of the camera 10 while moving around the object 30. In addition, the camera 10 can acquire a plurality of polarization images obtained by imaging the object 30 in a state in which polarization directions are different from each other in the imaging direction of the object 30 through the polarization filter 50 in which the polarization direction can be set to any angle. As will be described later, the polarization direction is a rotation angle with respect to a reference angle of the polarization filter 50 in a case of imaging the object 30 with the camera 10. The imaging direction is an angle representing a relative positional relationship between the camera 10 and the object 30 with respect to a reference position of the camera 10 and the object 30 in a case of imaging the object 30 with the camera 10. The polarization direction of the polarization filter 50 can be changed manually directly by the user or automatically in response to an instruction from the user. The polarization image is an image captured through the polarization filter 50.

The camera 10 is configured to store the polarization image obtained by imaging the object 30 through the polarization filter 50. The camera 10 can acquire a plurality of polarization images obtained by imaging (polarization image capturing) the object 30 in a state in which polarization directions are different from each other in the imaging direction of the object 30 manually by an operation from the user or automatically while the camera 10 is moved around the object 30.

The computer 20 includes a display and a keyboard. The display is an example of a display device that displays various types of information. The keyboard is an example of an input device through which the user can input an instruction. The computer 20 is configured to process various types of data including an image, input and output the various types of data, and store the various types of data. The computer 20 is configured to store a program or the like for executing a function and execute the program or the like.

The computer 20 can acquire a plurality of polarization images in the imaging direction acquired by the camera 10 by executing the program. Further, the computer 20 can acquire the first image from the plurality of (two or more) polarization images in the imaging direction. As a result, the computer 20 can acquire the plurality of first images.

The computer 20 is configured to generate a 3D model of the object 30 by photogrammetry from the plurality of first images by executing the program. Photogrammetry is a technique of analyzing a plurality of images obtained by imaging the object 30 from different angles and combining the plurality of images to generate (restore) a three-dimensional shape or structure (3D model). In the embodiment, the plurality of images are the plurality of first images.

The object 30 is not particularly limited in shape and size as long as it is an object for which a 3D model is to be generated. The object 30 may be an object having a physical shape.

The imaging table 40 has a plurality of marks 41 on a placement surface (upper surface). The mark 41 is an indicator of the imaging direction. In addition, a distance between two of the marks 41 is a reference for a size in a case of creating the 3D model. The imaging table 40 has cylindrical shape with a flat upper surface. The shape of the imaging table 40 is not limited as long as the object 30 can be placed on the imaging table 40. The imaging table 40 may be a rectangular parallelepiped. However, the imaging table 40 is not essential in a case of considering a condition such as a size of the object 30 and a location where the object 30 is disposed.

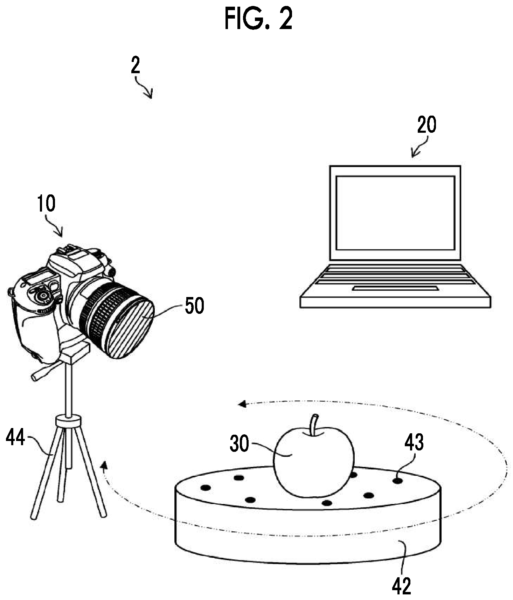

FIG. 2 is a diagram showing an outline of a system 2 that generates a 3D model different from the system 1. In FIG. 2, the same reference numerals are assigned to the same parts as the system 1 described above, and the description thereof will not be repeated. The system 2 of FIG. 2 includes the camera 10 and the computer 20. The camera 10 is fixed to a tripod 44 and is in a stationary state. The tripod 44 is an example of a support member that places the camera 10 in a stationary state.

The object 30 is disposed on an imaging table 42 having a mark 43. The imaging table 42 can be rotated unlike the imaging table 40 of the system 1. The imaging table 42 can rotate the object 30 at any angle.

In a case of imaging the entire object 30, the imaging table 42 rotates the object 30 (for example, 360° or more). In a case of imaging only a part of the object 30, the imaging table 42 rotates the object 30 in a specific range (a range smaller than 360°). The imaging table 42 includes a motor or the like and can rotate at any speed.

The camera 10 is configured to acquire a plurality of polarization images obtained by imaging the object 30 in a state in which polarization directions are different from each other in the imaging direction of the object 30 in the same manner as in the system 1 while the imaging table 42 rotates the object 30. The camera 10 can manually or automatically capture an image of the object 30 from a plurality of imaging directions. The camera 10 can acquire a plurality of polarization images obtained by imaging the object 30 in a state in which polarization directions are different from each other in the imaging direction of the object 30 manually by an operation from the user or automatically while the object 30 is rotated.

The camera 10 and the computer 20 of the system 2 are basically the same as the camera 10 and the computer 20 of the system 1.

### [Camera]

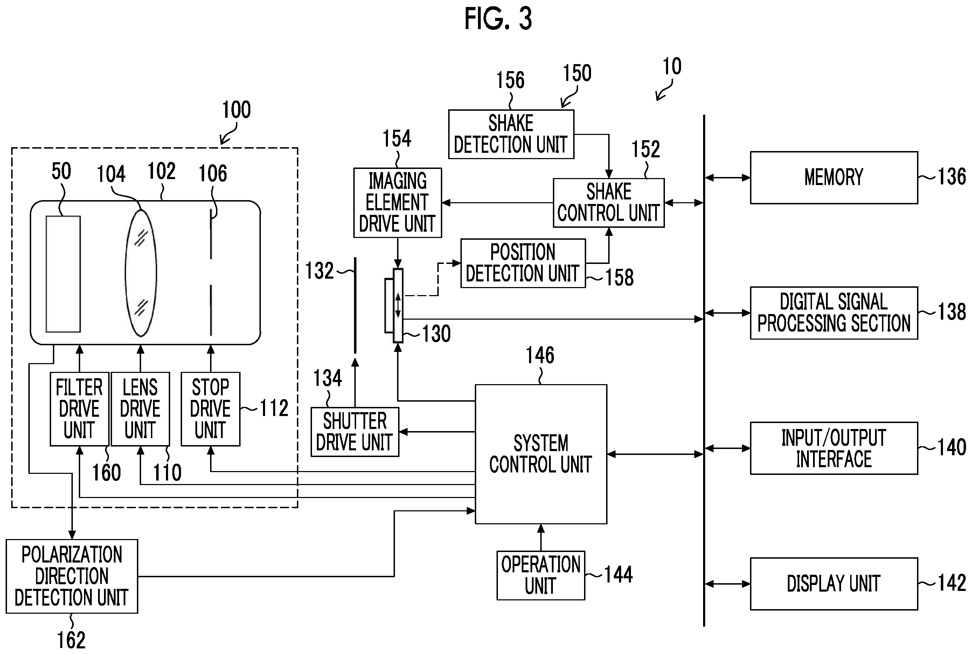

FIG. 3 is a block diagram showing a schematic configuration of the camera 10. As shown in FIG. 3, the camera 10 comprises a lens device 100. The lens device 100 includes an imaging optical system 102 including a lens group 104 and a stop 106, a lens drive unit 110, a stop drive unit 112, the polarization filter 50, a filter drive unit 160, a polarization direction detection unit 162, and the like.

The lens device 100 may be attachable to and detachable from the camera 10 or may be integrated with the camera 10.

The lens group 104 includes at least a focus lens that is movable in an optical axis direction. The focus lens is a lens for adjusting focus. The imaging optical system 102 adjusts focus by moving the focus lens back and forth along the optical axis. The focus lens is driven and operated by the lens drive unit 110. The focus lens can be moved to a focusing position at which the object 30 is in focus.

The stop 106 is composed of, for example, an iris stop. An amount of light passing through the imaging optical system 102 is adjusted by the stop 106. The stop 106 is operated by being driven by the stop drive unit 112.

The polarization filter 50 is an optical filter for controlling the polarization of light vibrating in a specific direction and removing a component (reflected light component) of light from the specific direction. The polarization filter 50 can change the polarization direction by being rotated. The polarization filter 50 is driven and operated by the filter drive unit 160. The filter drive unit 160 is controlled by a command from a system control unit 146. The user can rotate the polarization filter 50 to change the polarization direction without using the filter drive unit 160. The polarization filter 50 can be attached to and detached from the lens device 100. The camera 10 can image the object 30 without the polarization filter 50. The filter drive unit 160 can include a motor that rotates the polarization filter 50.

The polarization direction detection unit 162 detects a rotation angle of the polarization filter 50 in a case of imaging with respect to a reference angle of the polarization filter 50. The polarization direction detection unit 162 can include, for example, an encoder.

As shown in FIG. 3, the camera 10 comprises an imaging element 130, a shutter 132, a shutter drive unit 134, a memory 136, a digital signal processing section 138, an input/output interface 140, a display unit 142, an operation unit 144, a system control unit 146, and the like.

The imaging element 130 is configured by, for example, a complementary mental-oxide semiconductor (CMOS) type image sensor having a predetermined color filter array (for example, a Bayer array or the like). In the camera 10 of the embodiment, the imaging element 130 is configured to include a drive unit, an analog to digital converter (ADC), a signal processing unit, and the like. In such a case, the imaging element 130 is operated by being driven by the built-in drive unit. Further, the signal of each pixel is converted into a digital signal by the built-in ADC. Furthermore, the signal of each pixel is subjected to processing such as correlation double sampling processing, gain processing, and correction processing by a built-in signal processing unit as necessary. The signal processing may be performed on an analog signal of each pixel or may be performed on a digital signal of each pixel.

The imaging element 130 can be configured by an image sensor such as an organic thin film imaging element, an XY address type, and a charged coupled device (CCD) type in addition to the CMOS type image sensor.

The shutter 132 is disposed between the stop 106 and the imaging element 130. The shutter 132 is operated by being driven by the shutter drive unit 134. The shutter drive unit 134 controls opening and closing of the shutter 132 and controls an exposure time (shutter speed) in the imaging element 130.

The memory 136 includes a flash memory, a read-only memory (ROM), a random access memory (RAM), an auxiliary storage device, and the like. The flash memory and the ROM store a camera control program, a program for performing imaging in a focus bracketing imaging mode, an image processing program, various types of data necessary for camera control, and the like. The RAM temporarily stores imaging data and functions as a work area for processing by the system control unit 146. In addition, the camera control program, the image processing program, and the like stored in the flash memory or the like are transitorily stored in the RAM. The system control unit 146 may include a part (RAM) of the memory 136.

The digital signal processing section 138 generates image data by performing signal processing such as offset processing, gamma correction processing, demosaic processing, and RGB/YCrCb conversion processing on the image obtained by imaging.

The input/output interface 140 includes a connection unit that can be connected to an external display device, a connection unit that can be connected to an external recording device, a card connection unit to which a memory card is attached and detached, a communication unit that can be connected to a network, and the like. For example, as the input/output interface 140, a universal serial bus (USB), a high-definition multimedia interface (HDMI) (HDMI is a registered trademark), or the like can be applied.

The display unit 142 is used as a playback monitor for playing back the captured image and as a live view monitor on which a live view image is displayed during imaging. Further, the display unit 142 is used as a monitor for setting in a case where various settings are made. The display unit 142 is configured with, for example, a display such as a liquid crystal display (LCD), an organic light-emitting diode (OLED) display, or the like.

The operation unit 144 is configured to include various operating members for operating the camera 10. The operating member includes various operation buttons in addition to a power button and a shutter button. The various operation buttons include a button for turning on and off a function of a shake correction mechanism 150. Further, in a case where the display unit 142 is composed of a display unit with a touch panel mounted thereon, the operating member constituting the operation unit 144 includes the touch panel. The operation unit 144 outputs a signal corresponding to the operation of each operating member to the system control unit 146. The user can set, for example, an imaging (polarization image capturing) condition using the polarization filter 50 from the operation unit 144.

The system control unit 146 performs overall control of the camera 10. Further, the system control unit 146 calculates various physical quantities required for control. The system control unit 146 is composed of, for example, a microcomputer which comprises a processor, a memory, and the like. For example, the processor is configured by a central processing unit (CPU) and the like. The system control unit 146 can execute a program for polarization image capturing. The system control unit 146 includes control of the shake correction mechanism 150.

The camera 10 can comprise the shake correction mechanism 150. The shake correction mechanism 150 is a body image stabilizer (BIS) control type shake correction mechanism that performs shake correction by shifting (including rotation) the imaging element 130 in a plane orthogonal to the optical axis in a direction opposite to a shake direction. The shake correction mechanism 150 comprises a shake control unit 152, an imaging element drive unit 154, a shake detection unit 156, and a position detection unit 158.

The imaging element drive unit 154 can include an actuator that moves the imaging element 130. The shake detection unit 156 can include an acceleration sensor and/or a gyro sensor. The position detection unit 158 can include a Hall element that generates a voltage signal corresponding to a position of the imaging element 130. The shake control unit 152 controls the imaging element drive unit 154 based on a signal from the shake detection unit 156 and a signal from the position detection unit 158 to shift the imaging element 130 in a plane perpendicular to the optical axis to cancel the shake of the camera 10. The shake correction mechanism can be provided in the lens device 100. The camera 10 is an example of the optical device according to the embodiment of the present invention.

### [Computer]

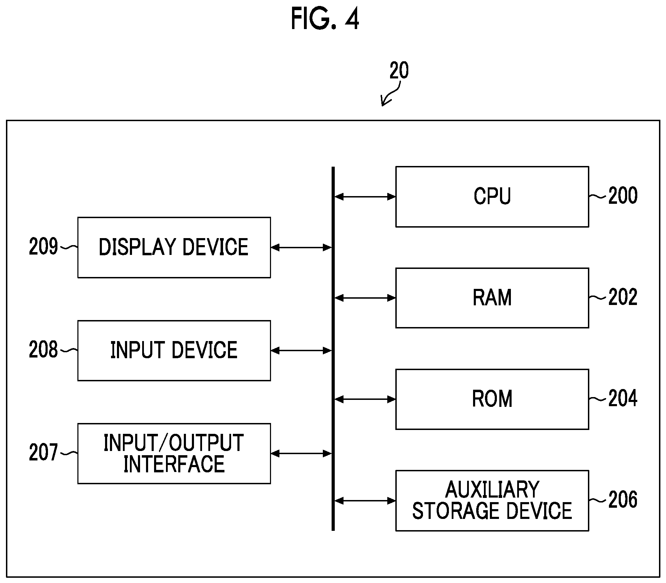

FIG. 4 is a block diagram showing an example of a hardware configuration of a computer 20. As shown in FIG. 4, the computer 20 is configured to include a CPU 200, a RAM 202, a ROM 204, an auxiliary storage device 206, an input/output interface (IF) 207, an input device 208, a display device 209, and the like. The ROM 204 and/or the auxiliary storage device 206 stores a program, which is executed by the CPU 200, and various types of data. The auxiliary storage device 206 is configured with, for example, a hard disk drive (HDD), a solid state drive (SSD), or the like. The input device 208 is configured with, for example, a keyboard, a mouse, and a touch panel. The display device 209 is configured as, for example, an LCD or an OLED. The image captured by the camera 10 is input to the computer 20 via the input/output interface 207 and is stored in, for example, the auxiliary storage device 206.

The computer 20 includes a program that creates the first image from the two or more polarization images and further includes a program that generates a three-dimensional (3D) model from the plurality of first images. The CPU 200 can generate the first image and further generate the 3D model by executing the program. The computer 20 is an example of an information processing device according to the present invention.

### [Information processing method]

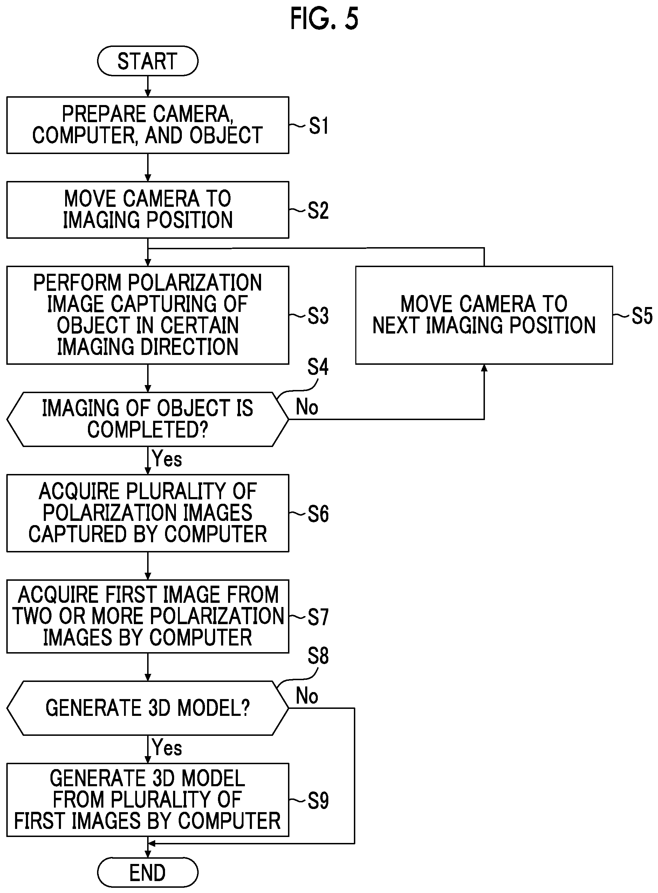

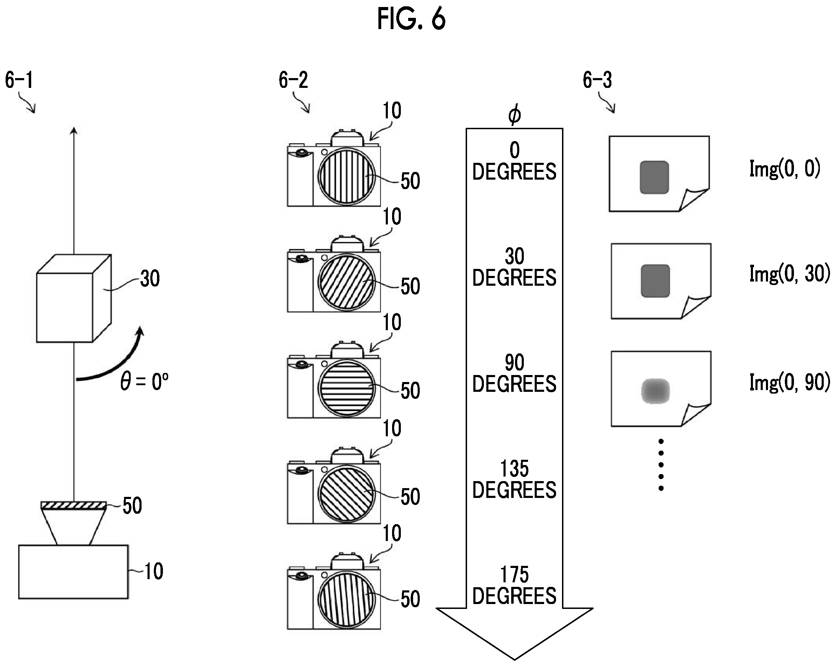

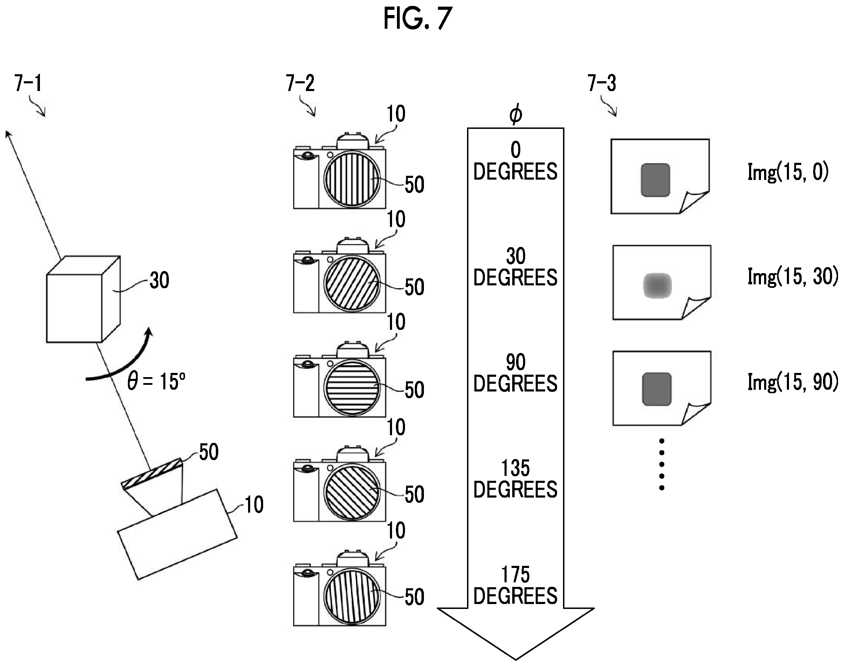

Next, an information processing method using the camera 10, the computer 20, and the imaging table 40 will be described. FIG. 5 is a flowchart showing the information processing method. FIGS. 6 and 7 are diagrams for describing polarization image capturing.

As shown in FIG. 5, the user prepares the camera 10 including the polarization filter 50 and capable of performing polarization image capturing, the computer 20 capable of acquiring the first image and creating the 3D model, and the object 30. The user installs the object 30 on the imaging table 40 (step S1).

The user moves to an imaging position for starting the imaging while holding the camera 10 (step S2). The user fixes the object 30 to the imaging table 40, moves around the object 30 while holding the camera 10, performs polarization image capturing for a plurality of imaging directions of the object 30, and acquires polarization images. Therefore, the user moves to any reference imaging position as the imaging position for starting the imaging. In the reference imaging position, an imaging direction serving as a reference for a relative position between the camera 10 and the object 30 is determined.

The user performs polarization image capturing of the object 30 in a certain imaging direction with the camera 10 at the imaging position (step S3).

As shown in 6-1 of FIG. 6, the user moves to the imaging position (here, the reference imaging position) while holding the camera 10, and determines a setting (imaging position, focal length of the camera, and the like) in which the object 30 is captured in the entire imaging range in a certain imaging direction of the object 30. In a case of starting the polarization image capturing, an imaging direction θ representing a relative positional relationship between the camera 10 and the object 30 is determined. In 6-1, since the position is a position at which the polarization image capturing is started, the imaging direction θ is determined to be 0 degrees.

Next, the user changes the camera 10 to the polarization image capturing mode. As shown in 6-2 of FIG. 6, the system control unit 146 controls the filter drive unit 160, and the filter drive unit 160 moves the polarization filter 50 to a polarization direction φ (= 0 degrees) that is a reference angle.

Next, the user points the camera 10 to the object 30 and presses the shutter button. As shown in 6-2 of FIG. 6, the camera 10 is controlled by the system control unit 146 and captures the plurality of polarization images while changing the polarization direction of the polarization filter 50 by a continuous imaging function. As a result, a plurality of polarization images having different polarization directions can be acquired by imaging the same object 30 at the same imaging position (θ = 0 degrees) with the same angle of view.

As shown in 6-3 of FIG. 6, each polarization image can be represented by Img(θ1, φ1), Img(θ1, φ2), Img(θ1, φ3), Img(θ1, φ4), ..., and Img(θn, φm) by associating the imaging direction θ with the polarization direction φ. As described above, θ is the imaging direction, and φ is the polarization direction. m is a parameter for identifying the imaging direction, and n is a parameter for identifying the polarization direction.

The polarization image is stored in the memory 136 as Img(θm, φn) for each polarization image capturing. The camera 10 can acquire the plurality of polarization images.

Specifically, the polarization image can be stored in the memory 136 as, for example, Img(0, 0), Img(0, 30), Img(0, 90), ..., and Img(0, 175). In addition, position information of the camera 10, for example, (X, Y, Z, Pitch, Yaw, Roll) = (1, 1, 1.2, 3, 3, 5), may be stored in association with the polarization image as the ancillary information. In addition, the output value of the shake detection unit 156 may be stored in association with the polarization image.

The polarization filter 50 may move smoothly (continuously). In addition, the polarization filter 50 may have a discrete movement such as repeating an operation of rotating by a set angle, stopping, and further rotating. The camera 10 performs polarization image capturing for each set polarization direction during the rotation movement of the polarization filter 50.

The camera 10 can capture, for example, 12 polarization images (180 degrees) in which the polarization direction φ is changed by 15 degrees each, under the control of the system control unit 146. In a case where the polarization image capturing ends, the system control unit 146 can rotate and move the polarization filter 50 to the reference angle for the next polarization image capturing. The captured polarization image can include data of the imaging direction θ and the polarization direction φ in a tag region in the same file such as EXIF. The polarization image and the data of the imaging direction θ and the polarization direction φ may be in a different file.

In addition, in a case where the user half-presses the shutter button, the camera 10 analyzes the live view image to determine how many degrees the polarization filter 50 should be divided into to acquire the polarization image. The condition for the polarization image capturing may be determined based on the determination. For example, in a case where it is determined that the object 30 has a large number of specular regions, the camera 10 can finely set (in 5-degree increments) the polarization direction. Therefore, the condition for the polarization image capturing, such as the polarization directions used, may be different for each imaging direction. For example, the polarization direction of the polarization filter 50 may be changed in 15-degree increments from a certain imaging direction, and the polarization direction of the polarization filter 50 may be changed in 5-degree increments from another imaging direction. With this configuration, the user's effort can be reduced, and the number of polarization images to be acquired can be optimized.

In addition, the camera 10 or the computer 20 can be set in advance with an illumination condition (for example, a position direction, intensity, and the like of the illumination). The camera 10 or the computer 20 can determine the condition for the polarization image capturing, for example, the polarization direction of the polarization filter 50 by using the information and the information on the current position of the camera 10.

The user can manually set the reflection suppression rate (low, medium, high), and the like as the mode, and the camera 10 can automatically set the reflection suppression rate (low, medium, high), and the like as the mode. The number of polarization images can be increased or decreased in a certain imaging direction θi according to the setting.

Next, after step S3, it is determined whether the imaging of the object 30 is completed (step S4). In a case where the imaging is not completed as a result of the determination (step S4: No), the camera 10 is moved to the next imaging position (step S5). Then, the process returns to step S3, and the user performs polarization image capturing of the object 30 with the camera 10 in the next imaging direction at the next imaging position (step S3).

As shown in 7-1 of FIG. 7, the user moves to the next imaging position while holding the camera 10, and determines a setting in which the object 30 is captured in the entire imaging range in the next imaging direction (θ = 15 degrees) of the object 30.

Next, the user points the camera 10 to the object 30 and presses the shutter button. As shown in 7-2 of FIG. 7, the camera 10 is controlled by the system control unit 146 and captures the plurality of polarization images while changing the polarization direction of the polarization filter 50 by the continuous imaging function. As a result, a plurality of polarization images can be acquired by imaging the same object 30 at the same imaging position (θ = 15 degrees). Specifically, as shown in 7-3 of FIG. 7, the polarization image captured by the polarization image capturing in the imaging direction θ (= 15 degrees) is stored in the memory 136 as, for example, Img(15, 0), Img(15, 30), Img(15, 90), ..., and Img(15, 175). As in FIG. 6, the ancillary information may be stored in association with the polarization image. In addition, the output value of the shake detection unit 156 may be stored in association with the polarization image.

The camera 10 or the computer 20 may analyze information such as the polarization direction φi and the polarization image of another imaging direction θi for which the polarization image capturing has already been completed to determine the polarization direction of a certain imaging direction θk. In a case where the imaging direction θi and the imaging direction θk are close to each other, the polarization direction φi is applied as the condition for the polarization image capturing in the imaging direction θk to the polarization direction of the imaging direction θk. The polarization image capturing is performed in the imaging direction θk without rotating the polarization filter 50. The user's effort and the number of captured images can be optimized.

The user moves around the object 30 (for example, θ = 360 degrees) and repeats the processing of steps S3 to S5 until the polarization image capturing from each imaging direction is completed. In a case where the user moves around the object 30, the current position may be specified from the acceleration sensor and/or the gyro sensor of the shake detection unit 156 of the camera 10, and the imaging direction may be presented to the user as the ancillary information.

In the above-described form, the case where the polarization image specified by Img(θ1, φ1) is acquired as a still image has been described, but the polarization image may be acquired from a moving image. Specifically, the camera 10 captures the moving image of the object 30 while rotating the polarization filter 50 from the reference imaging direction. A plurality of time frame images included in the captured moving image are acquired, and the time frame image can be used as the polarization image. In a case of acquiring the time frame image, the imaging direction θ and the polarization direction φ can be stored in association with each other as the ancillary information.

In step S4, the system control unit 146 may determine whether the imaging operation of the set imaging direction is completed. The system control unit 146 may display the image of which the imaging is already completed on the display unit 142 such that the user can easily determine.

On the other hand, in a case where the imaging of the object 30 is completed (step S4: Yes), the camera 10 ends the polarization image capturing.

Next, the computer 20 acquires the plurality of polarization images for the imaging direction of the object 30 acquired by the camera 10 (step S6). The computer 20 acquires the plurality of polarization images from the memory 136 of the camera 10 via the input/output interface 207 by wire or wirelessly, or from a recording medium such as a memory card.

All of the polarization images are stored in the auxiliary storage device 206 of the computer 20, for example, in association with the imaging direction θm and the polarization direction φn as shown in Table 1. In Table 1, the polarization images captured in the polarization directions φ1 to φn are included in the imaging directions θ1 to θm. In the imaging directions θ1 to θm, the conditions (the number of images or the polarization direction) of the included polarization images do not need to match each other.

**[Table 1]**

| Imaging direction | Polarization images (φ1, ..., φn: Polarization direction) |
|---|---|
| θ1 | Img(θ1, φ1), Img(θ1, φ2)...Img(θ1, φn) |
| θ2 | Img(θ2,φ1),Img(θ2,φ2)...Img(θ2,φn) |
| ... | ... |
| θm | Img(θm,φ1),Img(θm,φ2)...Img(θm,φn) |

Next, the computer 20 acquires the first image from the two or more polarization images for the imaging direction (step S7). That is, the first image is acquired from the two or more polarization images having the same imaging direction θ and different polarization directions φ. Specifically, the CPU 200 of the computer 20 acquires the first image by performing comparative dark synthesis on the two or more polarization images. The technology of the comparative dark synthesis itself is a known technology. The brief overview of the processing is as follows.

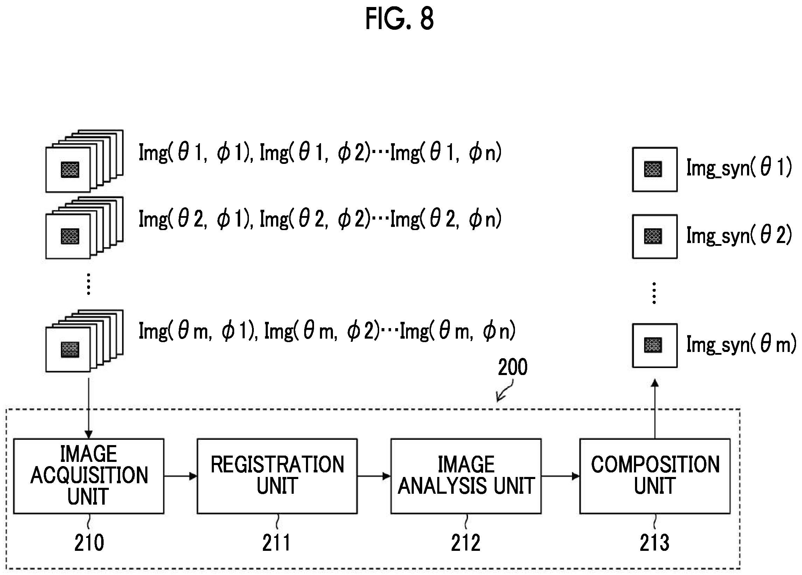

FIG. 8 shows a functional block related to the generation of the first image by the CPU 200. As shown in FIG. 8, the image acquisition unit 210 acquires all of the polarization images (1: Img(θ1, φ1), Img(θ1, φ2), ..., Img(θ1, φn), 2: Img(θ2, φ1), Img(θ2, φ2), ..., Img(θ2, φn), ..., m: Img(θm, φ1), Img(θm, φ2), ..., Img(θm, φn)) for the imaging direction from the auxiliary storage device 206.

The registration unit 211 performs registration of the two or more polarization images used for acquiring the first image. For example, in a case where a hand shake or the like occurs, the plurality of polarization images may be subjected to registration by geometric transformation such as affine transformation to be in the same coordinate system. For the registration to the same coordinate system, any one of the two or more polarization images may be used as a reference polarization image, and the other polarization images may be registered to the reference polarization image, or the two or more polarization images may be registered to another coordinate system. Whether the hand shake occurs can be determined from, for example, the output value of the shake detection unit 156, which is one of the ancillary information. However, the hand shake may be detected by another method, and is not limited to the output value of the shake detection unit 156. By accurately aligning the positions of the plurality of polarization images, unnatural edges and blurring during the combination can be prevented.

The image analysis unit 212 of the CPU 200 selects the pixel value having the lowest brightness for the pixels at the same coordinates from the polarization images (for example, Img(θ1, φ1), Img(θ1, φ2), ..., and Img(θ1, φn)) in the imaging direction as the pixel value at the coordinate position. That is, the image analysis unit 212 performs image analysis on the pixels (in units of pixels) at the same coordinates of each polarization image having the same imaging direction θ and different polarization directions φ.

Next, the composition unit 213 of the CPU 200 replaces the pixel value at the corresponding pixel position with the smallest pixel value selected for each pixel among the same pixel positions in the two or more polarization images to acquire a new first image.

This is because, in a case where the setting of the polarization angle is inappropriate for the reflected light, the influence of the reflected light cannot be removed, and as a result, the intensity of the light reaching each pixel is increased (that is, the light is bright and white), and the pixel value is large. On the other hand, in a case where the reflection is suppressed, the object and the scenery that are darker than the reflected light are imaged (basically) because the other side of the reflecting object (water surface or glass) is imaged.

Even in a case where the object 30 has, for example, a surface property having a high reflectance, the computer 20 can acquire the first image in which the influence of the reflection is suppressed. As will be described later, even in a case of the object 30 having a surface property having a high reflectance, a high-quality three-dimensional (3D) model can be generated.

In addition, the specular reflectance and the diffuse reflectance of each position (in this case, each coordinate in the polarization image) of the object 30 may be obtained from the plurality of polarization images and the polarization direction. The specular reflectance and the diffuse reflectance can be obtained by a bidirectional reflectance distribution function (BRDF), which is a known technology.

By obtaining the specular reflectance and the diffuse reflectance, in a case of generating the 3D model, gloss, diffuseness, reflection color, and the like that vary depending on the material of the object 30 can be expressed.

The composition unit 213 acquires the first image (Img_syn(θ1), Img_syn(θ2), ..., and Img_syn(θm)) from the polarization images (1: Img(θ1, φ1), Img(θ1, φ2), ..., Img(θ1, φn), 2: Img(θ2, φ1), Img(θ2, φ2), ..., Img(θ2, φn), ..., and m: Img(θm, φ1), Img(θm, φ2), ..., and Img(θm, φn)). A method of the image analysis and the combination in the comparative dark synthesis is not particularly limited, and a known technology can be applied.

In a case where the first image is acquired for the imaging direction, the CPU 200 stores the first image (Img_syn(θ1), Img_syn(θ2), ..., and Img_syn(θm)) in the auxiliary storage device 206. Further, the ancillary information of the polarization image, the specular reflectance, the diffuse reflectance, or the like may be stored in association with the first image.

In the above description, the example has been described in which the first image is acquired from the two or more polarization images in the imaging directions θ1 to θm. However, the present invention is not limited to this, and for example, the polarization direction φ may be determined for a certain imaging direction θ. That is, in a certain imaging direction θ, the plurality of polarization images are not acquired. Therefore, in the imaging direction θi, one polarization image is acquired, and the polarization image is acquired as the first image.

Next, it is determined whether to generate the 3D model (step S8). In step S8, in a case where it is determined not to generate the 3D model (step S8: No), the information processing ends. The stored plurality of first images can be provided to another information system, for example, as images for generating the 3D model.

As an example of acquiring the first image, the case has been described in which the first image is acquired for the imaging direction after all of the polarization images are acquired. However, the present invention is not limited to this, and the first image may be acquired after acquiring the polarization image of a certain imaging direction, the next imaging position may be moved to, and the first image may be acquired after acquiring the polarization image of the next imaging direction. That is, the acquisition of the polarization image and the acquisition of the first image may be executed in sequence.

In step S8, in a case where it is determined to generate the 3D model (step S8: Yes), the process proceeds to step S9.

Next, the computer 20 generates the 3D model from the plurality of first images (step S9). The technology of generating the 3D model by photogrammetry is a known technology. The brief overview of the processing is as follows.

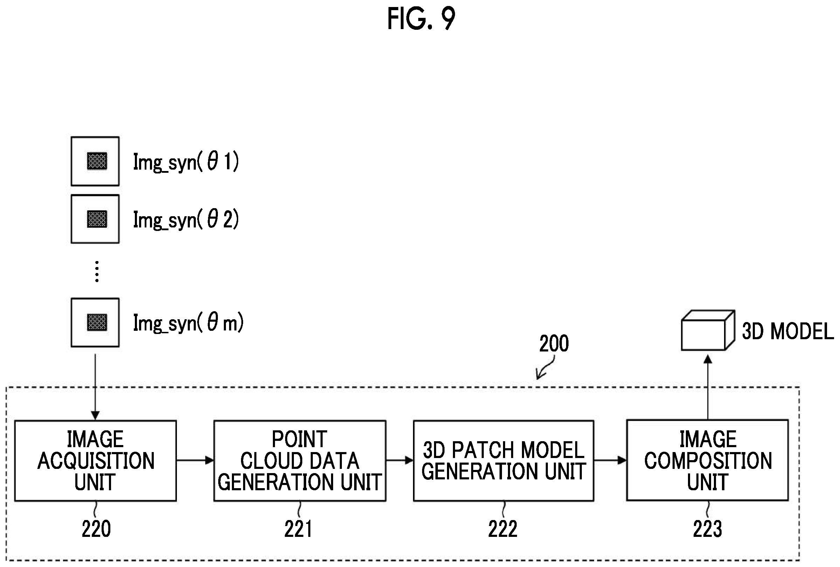

FIG. 9 shows a functional block related to the 3D model generation of the CPU 200. As shown in FIG. 9, the image acquisition unit 220 acquires the first image (Img_syn(θ1), Img_syn(θ2), ..., and Img_syn(θm)) for the imaging direction from the auxiliary storage device 206 to acquire the plurality of first images as a result.

The point cloud data generation unit 221 performs processing of analyzing the plurality of first images to generate three-dimensional point cloud data of feature points. The point cloud data generation unit 221 extracts feature points from each first image. Next, the point cloud data generation unit 221 matches the feature points corresponding to each other between the different first images as corresponding points. The point cloud data generation unit 221 estimates camera parameters (for example, a fundamental matrix, an essential matrix, and internal parameters) of the camera and estimates the imaging position and the posture based on the estimated camera parameters. Then, three-dimensional positions of the feature points of the object 30 are obtained. Bundle adjustment is performed as necessary. The three-dimensional coordinates of the estimated feature points are combined to generate point cloud data (point cloud).

The 3D patch model generation unit 222 performs processing of generating a 3D patch model of the subject based on the three-dimensional point cloud data of the object 30 generated by the point cloud data generation unit 221. Specifically, a patch (mesh) is generated from the generated three-dimensional point cloud, and the 3D patch model is generated. Thus, the relief of the surface can be represented with a small number of points.

The 3D model generation unit 223 performs texture mapping on the 3D patch model generated by the 3D patch model generation unit 222 to generate a 3D model (three-dimensional model) to which the texture is applied. The 3D model generation unit 223 maps the texture to the mesh to apply a realistic appearance of the object 30 to the 3D patch model. By adding the specular reflectance and the diffuse reflectance, in a case of generating the 3D model, the material or the like of the object 30 can be expressed.

The data of the generated 3D model is stored in the auxiliary storage device 206 or the like. In addition, the data of the 3D model is displayed on the display device 209 as necessary.

In the embodiment, a case has been described in which the object 30 is installed on the imaging table 40 and the camera 10 moves around the object 30 in the system 1. The present invention is not limited to this, and the 3D model can be generated in the system 2.

In the embodiment, since the 3D model is generated by the photogrammetry from the plurality of first images in which the reflection of the object 30 is suppressed, a high-accuracy 3D model can be generated.

In a case of creating the 3D model, the distance information between the two marks 41 of the imaging table 40 can be used as a reference for the size of the 3D model. The position relationship between the camera 10 and the object 30 may be obtained based on the plurality of marks 41 of the imaging table 40, and the 3D model may be generated.

### [Preferred Embodiment]

Next, a preferred embodiment will be described. In the preferred embodiment, the computer 20 specifies the polarization image to be excluded in a case of acquiring the first image. In addition, the computer 20 specifies the first image to be excluded in a case of generating the 3D model.

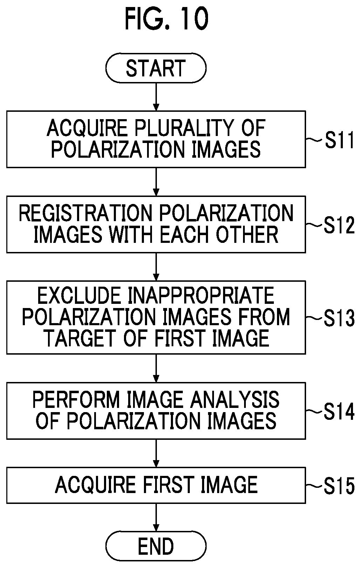

FIG. 10 is a flowchart showing a method of specifying the polarization image to be excluded in a case of acquiring the first image. As shown in FIG. 10, the plurality of polarization images are acquired for the imaging direction (step S11). Specifically, the image acquisition unit 210 acquires the plurality of polarization images.

Next, the plurality of polarization images are registered in the imaging direction (step S12). Specifically, the registration unit 211 performs the registration. The registration is performed, for example, by selecting a reference image from the plurality of polarization images and extracting the feature points from the reference image. The corresponding points corresponding to the feature points of the reference image are tracked to determine which position in the remaining polarization images is moved. From the result, the remaining polarization images are subjected to parallel movement, rotation, and enlargement and reduction processing by affine transformation or the like. The plurality of polarization images are registered. Even in a case where a slight hand shake or the like occurs, the registration in the polarization image can be performed.

Next, the inappropriate polarization image is excluded from the target in a case of acquiring the first image (step S13). Specifically, the registration unit 211 excludes the polarization image from the target of the first image. In step S12, the registration unit 211 can determine not to apply the polarization image that could not be registered with the reference image to the acquisition of the first image.

In addition, it can be determined not to apply the polarization image in which the hand shake is large to the first image. Whether the hand shake occurs can be determined from the high-frequency component of the polarization image or the like or from the output value of the hand shake detection unit 156. The registration unit 211 stores the information indicating that the polarization image is not applied to the acquisition of the first image in association with the polarization image in the auxiliary storage device 206.

In a case of excluding the polarization image from the target, the polarization image itself may be excluded, or only a specific region in the polarization image may be excluded.

Next, the image analysis is performed for each unit pixel for the plurality of polarization images having the common imaging direction (step S14). Finally, the first image is acquired from each polarization image (step S15). Note that the polarization images do not include the polarization images excluded in step S13.

By excluding the polarization image that is not suitable for the first image, the high-quality first image can be acquired. Therefore, the high-quality 3D model can be obtained from the high-quality first image.

In the flow shown in FIG. 10, in a case where the polarization image to be excluded from the target of the first image is determined, the computer 20 can also prompt the camera 10 to perform the re-imaging. The information on the position and the posture of the camera 10 that has captured the polarization image can be acquired from the ancillary information or the like in a case of acquiring the polarization image. The computer 20 can notify the user of the position and the posture of the camera 10. The user can easily know the location of the object 30 that requires the re-imaging of the polarization image.

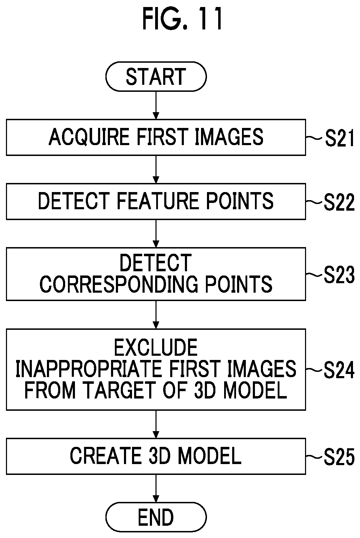

FIG. 11 is a flowchart showing a method of specifying the first image to be excluded in a case of generating the 3D model. As shown in FIG. 11, the first image is acquired (step S21). Specifically, the image acquisition unit 220 acquires the plurality of first images.

Next, feature points are extracted from the plurality of first images (step S22). The feature points are detected as corresponding points from the plurality of first images (step S23). Specifically, the point cloud data generation unit 221 extracts feature points from the plurality of first images and, by comparing the feature points of the plurality of first images, detects the feature points that match as corresponding points.

Next, the first image is excluded from the target of the 3D model (step S24). Specifically, the point cloud data generation unit 221 can determine not to apply a first image to the 3D model in a case where feature points cannot be extracted from the first image in step S22 or corresponding points cannot be detected for the first image in step S23. In addition, the point cloud data generation unit 221 can determine that a first image is to be excluded from the target of the 3D model based on a high-frequency component of the first image or the like. The point cloud data generation unit 221 stores the information indicating that the first image is not applied to the generation of the 3D model in association with the first image in the auxiliary storage device 206.

Next, the 3D model is generated from the first image (step S25). Specifically, the point cloud data generation unit 221 generates the point cloud data from the first image by combining the camera parameters of the camera, the imaging position and the posture, and the three-dimensional coordinates of the estimated feature points, and the 3D patch model generation unit 222 and the 3D model generation unit 223 generate the 3D model. In this case, the first images do not include any first images that have been excluded from the target of the 3D model. Since the first image that is not suitable for the generation of the 3D model is excluded, the high-quality 3D model can be generated.

In the flow shown in FIG. 11, in a case where the first image to be excluded from the target of the 3D model is determined, the computer 20 can also prompt the camera 10 to perform the re-imaging. The information on the position and the posture of the camera 10 that has captured the polarization image applied to the first image can be acquired from the ancillary information or the like in a case of acquiring the first image. The computer 20 can notify the user of the position and the posture of the camera 10. The user can easily know the location of the object 30 that requires the re-imaging of the polarization image necessary for generating the first image.

### <Condition Setting of Polarization Image Capturing>

The determination of the condition setting in a case of performing the polarization image capturing will be described. The condition setting includes pre-imaging of the object 30 before acquiring the polarization image.

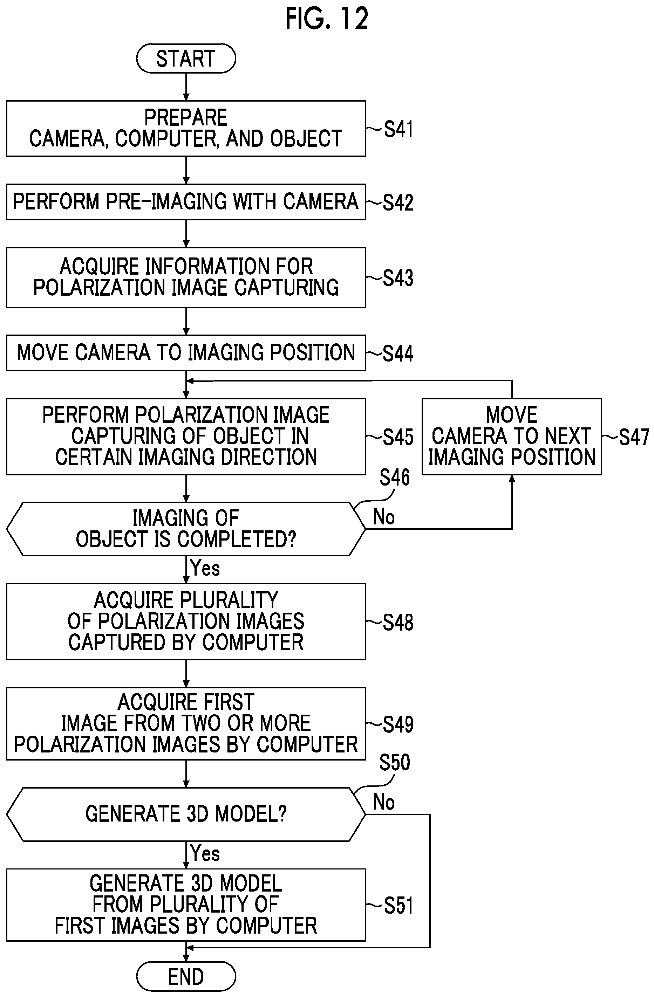

Next, a case in which the object 30 is pre-imaged by the camera 10 will be described. FIG. 12 is a flowchart showing a method of generating a three-dimensional model including pre-imaging.

The camera 10 capable of performing the polarization image capturing, the computer 20 capable of acquiring the first image and creating the 3D model, and the object 30 are prepared. As shown in FIG. 12, the user installs the object 30 on the imaging table 40 (step S41).

The user moves to an imaging position for starting the pre-imaging while holding the camera 10, fixes the object 30 to the imaging table 40, and performs the pre-imaging of the image of the object 30 from each imaging direction while moving around the object 30 holding the camera 10 (step S42). The pre-imaging means imaging the object 30 before the polarization image capturing (step S45). The pre-imaging may be a static image or a moving image of the object 30. In addition, the pre-image may be a live view image. The distance between the object 30 and the camera 10 can also be obtained.

Next, the computer 20 acquires the pre-image pre-imaged by the camera 10 and acquires information for determining the condition of the polarization image capturing (step S43). As the information that can be acquired, it is sufficient to understand the approximate size of the object 30, the surface property (specular, rough, or degree of reflection) of the object 30, the polarization direction of the polarization filter 50, the illumination environment, and the like. The information is not particularly limited as long as the information can be used for the polarization image capturing in step S45.

The user moves to an imaging position for starting the imaging while holding the camera 10 (step S44). The user performs polarization image capturing of the object 30 with the camera 10 at the imaging position (step S45). The polarization image capturing is performed based on the information acquired in the pre-imaging in step S43.

The condition setting of the polarization image capturing is executed by the system control unit 146 (CPU) of the camera 10 or the CPU 200 of the computer 20.

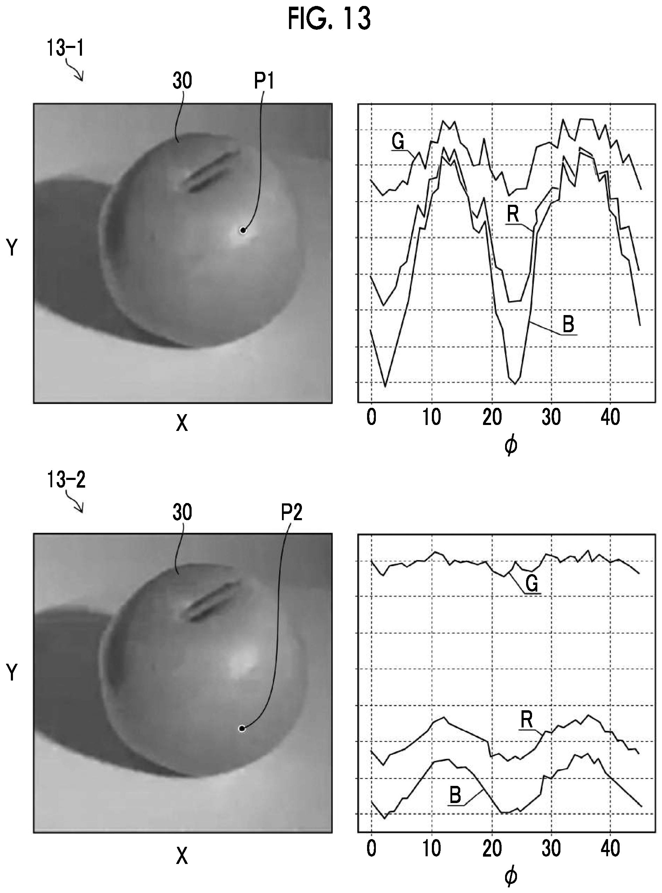

FIG. 13 is a diagram for describing an example of the condition setting of the polarization image capturing. FIG. 13 shows a result of pre-imaging the object 30 from a certain direction. In 13-1 of FIG. 13, the pixel value at the position P1 of the object 30 is focused on. On the other hand, in 13-2 of FIG. 13, the pixel value at the position P2 of the object 30 is focused on. The position P1 and the position P2 are common positions with respect to the X-axis, and the position P1 is located above the position P2 with respect to the Y-axis.

The camera 10 images the position P1 and the position P2 through the polarization filter 50 while continuously changing the polarization direction of the polarization filter 50. The graphs shown in 13-1 and 13-2 are graphs in which the vertical axis is the intensity of the pixel value and the horizontal axis is the polarization direction φ. The graph of 13-1 is a graph in which the pixel value for each polarization direction at the position P1 is decomposed into RGB and plotted. The graph of 13-2 is a graph in which the pixel value for each polarization direction at the position P2 is decomposed into RGB and plotted.

From 13-1 and 13-2, it can be understood that the pixel value is low and the reflection from the object 30 is suppressed in a case where the polarization direction is 3 degrees to 4 degrees and 24 degrees to 25 degrees.

From the graphs shown in 13-1 and 13-2, the pixel value is low at the same polarization direction φ at the position where the X-axis is common. That is, it can be understood that it is not necessary to focus on all of the pixel values.

In step S45 described below, by using the information (for example, the polarization angle) obtained in the pre-imaging, the accuracy of the polarization image is improved, and the reflectance can be suppressed.

In addition, in the graphs of 13-1 and 13-2, the pixel value is acquired and plotted for all of the polarization directions. Therefore, it is expected that a large amount of data is required and a long time is required to determine the polarization direction having the low pixel value. Therefore, in the pre-imaging, the polarization filter 50 is intermittently (for example, at intervals of 5 degrees or 10 degrees) rotated to acquire the pixel value. The acquired pixel value is plotted on the graph.

Although there is a missing portion in the graph, these graphs have a certain pattern. Therefore, the missing portion in the graph is interpolated (for example, by spline interpolation), and the polarization direction having the low pixel value can be estimated. The estimated polarization direction can be applied to the polarization image capturing.

Returning to FIG. 12, after step S45, it is determined whether the imaging of the object 30 is completed (step S46). In a case where the imaging is not completed as a result of the determination (step S46: No), the camera 10 is moved to the next imaging position (step S47). The user performs polarization image capturing of the object 30 with the camera 10 in the next imaging direction at the next imaging position (step S45). The processing from step S45 to step S47 is repeatedly executed until the imaging of the object 30 is completed.

In a case where the imaging of the object 30 is completed (step S46: Yes), the camera 10 ends the polarization image capturing.

Next, the computer 20 acquires the plurality of polarization images for the imaging direction of the object 30 acquired by the camera 10 (step S48).

Next, the computer 20 acquires the first image from the two or more polarization images for the imaging direction (step S49).

Next, it is determined whether to generate the 3D model (step S50). In step S50, in a case where it is determined not to generate the 3D model (step S50: No), the information processing ends.

In step S50, in a case where it is determined to generate the 3D model (step S50: Yes), the process proceeds to step S51.

Next, the computer 20 generates the 3D model from the plurality of first images (step S51). In a case where the 3D model is generated from the first image, the information processing ends.

In the embodiment described above, the systems 1 and 2 constituting the image processing device including the camera 10 and the computer 20 have been described. The camera 10 includes the system control unit 146, the computer 20 includes the CPU, and the functions of the system control unit 146 and the CPU 200 are not particularly limited. For example, the condition determination of the polarization image capturing may be executed by either the CPU 200 or the system control unit 146. That is, as long as the camera 10 and the computer 20 can generate the first image, any of the CPU 200 or the system control unit 146 may perform the functions.

In addition, the present invention includes an information processing system that generates the first image by the computer 20. In addition, the present invention includes an optical device that performs polarization image capturing, acquires the first image from the polarization image, and generates the 3D model from the first image by using only the camera 10. Although the case where the polarization image capturing is performed by one camera 10 has been described as an example, the polarization image capturing can also be performed by a plurality of cameras 10.

### [Configuration of System Control Unit 146 and CPU 200]

The functions of the system control unit 146 and the CPU 200 are implemented by various processors. The various types of processors include a CPU and/or a graphic processing unit (GPU), which is a general-purpose processor that executes a program to function as the various types of processing sections, a programmable logic device (PLD), which is a processor of which a circuit configuration can be changed after manufacture, such as a field programmable gate array (FPGA), and a dedicated electric circuit, which is a processor having a circuit configuration that is designed for dedicated use in order to perform specific processing, such as an application specific integrated circuit (ASIC). The program is synonymous with software.

One processing section may be configured with one of the various types of processors or may be configured with two or more processors of the same type or different types. For example, one processing section may be configured with a plurality of FPGAs or a combination of a CPU and an FPGA. In addition, one processor may constitute a plurality of processing sections. As an example in which a plurality of processing sections constitute one processor, first, there is a form in which one processor is configured with a combination of one or more CPUs and software as typified by a computer used in a client, a server, or the like, and this processor functions as the plurality of processing sections. Second, there is a form in which a processor that realizes functions of an entire system including the plurality of processing sections with one integrated circuit (IC) chip is used, as typified by a system on a chip (SoC) or the like. In this way, various processing units are configured using one or more of the various processors as the hardware structure.

The present invention has been described above, but it is obvious that the present invention is not limited to the above examples, and various improvements or modifications may be made within the scope of the present invention without departing from the gist thereof.

### Explanation of References

1: system
2: system
10: camera
20: computer
30: object
40: imaging table
41: mark
42: imaging table
43: mark
44: tripod
50: polarization filter
100: lens device
102: imaging optical system
104: lens group
106: stop
110: lens drive unit
112: stop drive unit
130: imaging element
132: shutter
134: shutter drive unit
136: memory
138: digital signal processing section
140: input/output interface
142: display unit
144: operation unit
146: system control unit
150: correction mechanism
152: control unit
154: imaging element drive unit
156: detection unit
158: position detection unit
160: filter drive unit
162: polarization direction detection unit
200: CPU
202: RAM
204: ROM
206: auxiliary storage device
207: input/output interface
208: input device
209: display device
210: image acquisition unit
211: registration unit
212: image analysis unit
213: composition unit
220: image acquisition unit
221: point cloud data generation unit
222: 3D patch model generation unit
223: 3D model generation unit

## Claims

1. An information processing system comprising:
one or more processors,
wherein the one or more processors are configured to:
acquire a plurality of polarization images acquired by imaging an object in a plurality of imaging directions in a state in which polarization directions are different from each other; and
acquire a first image from the two or more polarization images.

2. The information processing system according to claim 1,
wherein the one or more processors are configured to acquire ancillary information including information on a polarization direction of the polarization image.

3. The information processing system according to claim 1 or 2,
wherein the one or more processors are configured to acquire the first image generated based on analysis of the two or more images having different polarization directions.

4. The information processing system according to claim 3,
wherein the analysis is analysis in units of pixels.

5. The information processing system according to claim 4,
wherein the analysis in units of pixels of corresponding portions corresponding to the same position of the two or more polarization images having different polarization directions is comparative dark synthesis.

6. The information processing system according to claim 1 or 2,
wherein the one or more processors are configured to, in a case of generating the first image, transform at least one of the two or more images having different polarization directions into a coordinate system of at least one other image by geometric transformation based on information between the two or more images having different polarization directions.

7. The information processing system according to claim 1 or 2,
wherein the one or more processors are configured to determine whether to apply the plurality of polarization images to generation of the first image.

8. The information processing system according to claim 2,
wherein the ancillary information includes position information of an imaging apparatus in a case of imaging.

9. The information processing system according to claim 2 or 8,
wherein the ancillary information is associated with the first image.

10. The information processing system according to claim 1 or 2,
wherein the one or more processors are configured to generate a 3D model of the object based on the first image generated in the plurality of imaging directions.

11. The information processing system according to claim 1 or 2,
wherein the one or more processors are configured to:
analyze the two or more images having different polarization directions acquired in one imaging direction of the plurality of imaging directions; and
determine a polarization direction in an imaging direction different from the one imaging direction of the plurality of imaging directions.

12. The information processing system according to claim 1,
wherein the one or more processors are configured to determine a condition for capturing the two or more images having different polarization directions based on an environmental condition for imaging the object and an imaging position for imaging the object.

13. The information processing system according to claim 1 or 2,
wherein the one or more processors are configured to:
receive an imaging mode; and
determine a condition for capturing the two or more images having different polarization directions based on the imaging mode.

14. The information processing system according to claim 1 or 2,
wherein the one or more processors are configured to calculate a specular reflectance or a diffuse reflectance at a coordinate position in the two or more images having different polarization directions based on information on the imaging direction and the polarization direction.

15. The information processing system according to claim 1 or 2,
wherein the one or more processors are configured to determine a condition for capturing the plurality of polarization images based on a pre-image obtained by imaging the object before acquiring the plurality of polarization images.

16. The information processing system according to claim 1 or 2,
wherein the two or more polarization images are time frame images included in a moving image.

17. An image processing device comprising:
an optical device including a polarization filter capable of capturing an image of an object; and
an information processing device,
wherein the image processing device includes one or more processors included in any of the optical device or the information processing device, and the one or more processors are configured to:
acquire a plurality of polarization images acquired by imaging the object in a plurality of imaging directions in a state in which polarization directions are different from each other; and
acquire a first image from the two or more polarization images.

18. The image processing device according to claim 17,
wherein the one or more processors are configured to acquire ancillary information including information on a polarization direction of the polarization image.

19. The image processing device according to claim 17 or 18,
wherein the one or more processors are configured to generate a 3D model of the object based on the first image generated in the plurality of imaging directions.

20. The image processing device according to claim 17 or 18,
wherein the one or more processors are configured to determine a condition for capturing the plurality of polarization images based on a pre-image obtained by imaging the object before acquiring the plurality of polarization images.

21. The image processing device according to claim 17 or 18,
wherein the one or more processors are configured to perform control to move the optical device or the object.

22. The image processing device according to claim 17 or 18,
wherein the one or more processors are configured to perform control to change in a polarization direction of the polarization filter.

23. An optical device comprising:
one or more processors; and
a polarization filter, the optical device being capable of capturing an image of an object,
wherein the one or more processors are configured to:
acquire a plurality of polarization images acquired by imaging the object in a plurality of imaging directions in a state in which polarization directions are different from each other; and
acquire a first image from the two or more polarization images.

24. The optical device according to claim 23,
wherein the one or more processors are configured to acquire ancillary information including information on a polarization direction of the polarization image.

25. The optical device according to claim 23 or 24,
wherein the one or more processors are configured to determine a condition for capturing the plurality of polarization images based on a pre-image obtained by imaging the object before acquiring the plurality of polarization images.

26. The optical device according to claim 23 or 24,
wherein the one or more processors are configured to generate a 3D model of the object based on the first image generated in the plurality of imaging directions.

27. An information processing method executed by an information processing system including one or more processors, the information processing method comprising, by the one or more processors:
acquiring a plurality of polarization images acquired by imaging an object in a plurality of imaging directions in a state in which polarization directions are different from each other; and
acquiring a first image from the two or more polarization images.

28. A program causing an information processing system including one or more processors to execute an information processing method, the program causing the one or more processors to:
acquire a plurality of polarization images acquired by imaging an object in a plurality of imaging directions in a state in which polarization directions are different from each other; and
acquire a first image from the two or more polarization images.

29. A non-transitory computer-readable recording medium on which the program according to claim 28 is recorded.
